# EUROPEAN PATENT APPLICATION

(11) **EP 1 760 291 A2**
(43) Date of publication of application: **07.03.2007**
(21) Application number: 06254487.9
(22) Date of filing: 29.08.2006
(51) Int. Cl.: F02C 7/047

(54) **Methods and apparatus for operating gas turbine engines**

(30) Priority: 01.09.2005 US 217640
(71) Applicant: General Electric Company, Schenectady, NY 12345 (US)
(72) Inventor: Moniz, Thomas Ory, Loveland Ohio 45140 (US); Venkataramani, Kattlaicheri Srinivasan, West Chester Ohio 45069 (US); Stephenson, Justin Paul, Cincinnati Ohio 45244 (US); Krammer, Erich Alois, West Chester Ohio 45069 (US); Gerstler, William Dwight, Niskayuna New York 12309 (US)
(74) Representative: Bedford, Grant Richard

(57) **Abstract**

A method for assembling a turbine engine (10) to facilitate preventing ice accumulation on the turbine engine during engine operation. The method includes coupling a manifold to the gas turbine engine such that the manifold (102) is coupled in thermal communication with a heat source, coupling a first heat pipe (100) to the manifold such that the first heat pipe partially circumscribes the gas turbine engine in a clockwise orientation, and coupling a second heat pipe to the manifold such that the second heat pipe partially circumscribes the gas turbine engine in a counter-clockwise orientation.

## Description

This invention relates generally to gas turbine engines, and more particularly, to methods and apparatus for operating gas turbine engines.

Gas turbine engines typically include an inlet, a fan, low and high pressure compressors, a combustor, and at least one turbine. The compressors compress air which is channeled to the combustor where it is mixed with fuel. The mixture is then ignited for generating hot combustion gases. The combustion gases are channeled to the turbine(s) which extracts energy from the combustion gases for powering the compressor(s), as well as producing useful work to propel an aircraft in flight or to power a load, such as an electrical generator.

When engines operate in icing conditions, i.e., exposed to clouds of supercooled water droplets, ice may accumulate on exposed engine structures. More specifically, if engines are operated within icing conditions at low power for extended periods of time, ice accumulation within the engine and over exposed engine structures may be significant. Over time, continued operation of the engine, a throttle burst from lower power operations to higher power operations, and/or vibrations due to either turbulence or asymmetry of ice accretion, may cause the accumulated ice build-up to be ingested by the high pressure compressor. Such a condition, known as an ice shed, may cause the compressor discharge temperature to be suddenly reduced. In response to the sudden decrease in compressor discharge temperature, the corrected core speed increases in the aft stages of the high pressure compressor. This sudden increase in aft stage corrected core speed may adversely impact compressor stall margin. In some cases, it may also lead to an engine flame out.

To facilitate preventing ice accretion within the engine and over exposed surfaces adjacent the engine, at least some known engines include a control system that enables the engine to operate with an increased operating temperature and may include sub-systems that direct high temperature bleed air from the engine compressor to provide heat to the exposed surfaces. However, the increased operating temperature and the bleed systems may decrease engine performance. Such systems may also require valves to turn off the flow of the high temperature air during take-off and other high power operations to protect the engine. In addition to the increased cost, such valving may pose a reliability problem. As such, to further facilitate preventing ice accumulation, at least some known engines are sprayed with a deicing solution prior to operation. However, during flight and over time, the effectiveness of the deicing solution may decrease. More specifically, during engine operation, evaporative cooling may still cause freezing and ice accumulation over external engine surfaces, such as a front frame of the engine. Conventional electrical heating is an option, but it requires large quantities of electricity for performing the de-icing operation and may require additional electrical generators, electrical circuits and complex interaction logic with the airplane's computers with the attendant increased cost, weight and performance penalties.

In one aspect of the present invention, a method for assembling a turbine engine to facilitate preventing ice accumulation on the turbine engine during engine operation is provided. The method includes coupling a manifold to the gas turbine engine such that the manifold is coupled in thermal communication with a heat source, coupling a first heat pipe to the manifold such that the first heat pipe partially circumscribes the gas turbine engine in a clockwise orientation, and coupling a second heat pipe to the manifold such that the second heat pipe partially circumscribes the gas turbine engine in a counter-clockwise orientation.

In another aspect, an ice protection system for a gas turbine engine is provided. The ice protection system includes a manifold coupled to the gas turbine engine such that the manifold is coupled in thermal communication with a heat source, a first heat pipe coupled to the manifold such that the first heat pipe partially circumscribes the gas turbine engine in a clockwise orientation, and a second heat pipe coupled to the manifold such that the second heat pipe partially circumscribes the gas turbine engine in a counter-clockwise orientation.

In a further aspect, a gas turbine engine is provided. The gas turbine engine includes a fan assembly, a booster downstream from the fan assembly, a high pressure compressor downstream from the booster, a splitter circumscribing the booster, and an ice protection system. The ice protection system includes a manifold coupled to the gas turbine engine such that the manifold is coupled in thermal communication with a heat source, a first heat pipe coupled to the manifold such that the first heat pipe partially circumscribes the gas turbine engine in a clockwise orientation, and a second heat pipe coupled to the manifold such that the second heat pipe partially circumscribes the gas turbine engine in a counter-clockwise orientation.

Various aspects and embodiments of the present invention will now be described in connection with the accompanying drawings, in which:
Figure 1 is schematic illustration of an exemplary gas turbine engine;
Figure 2 is a side view of a portion of the gas turbine engine shown in Figure 1 including a first exemplary ice protection system;
Figure 3 is a side view of a portion of the gas turbine engine shown in Figure 1 including the ice protection system shown in Figure 2;
Figure 4 is a side view of the ice protection system shown in Figure 2;
Figure 5 is a side view of a portion of the ice protection system shown in Figure 2;
Figure 6 is a schematic view of a portion of the gas turbine engine shown in Figure 1 including a second exemplary ice protection system; and

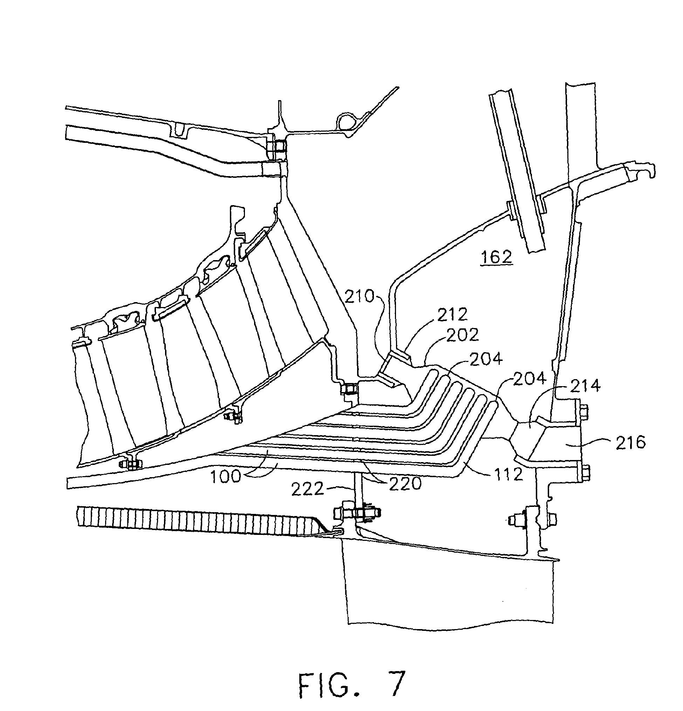

Figure 7 is a schematic view of a portion of the gas turbine engine shown in Figure 6 including the second exemplary ice protection system.

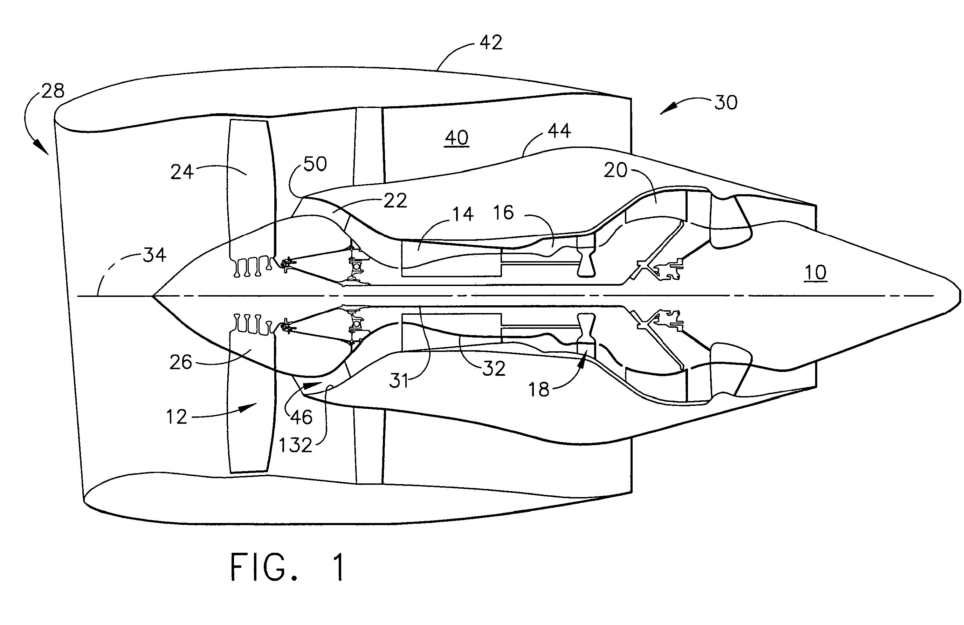

Figure 1 is a schematic illustration of a gas turbine engine 10 including a fan assembly 12, a high pressure compressor 14, and a combustor 16. Engine 10 also includes a high pressure turbine 18, a low pressure turbine 20, and a booster 22. Fan assembly 12 includes an array of fan blades 24 extending radially outward from a rotor disc 26. Engine 10 has an intake side 28 and an exhaust side 30. In one embodiment, the gas turbine engine is a GE90 available from General Electric Company, Cincinnati, Ohio. In an alternative embodiment, engine 10 includes a low pressure compressor. Fan assembly 12, booster 22, and turbine 20 are coupled together by a first rotor shaft 31, and compressor 14 and turbine 18 are coupled together by a second rotor shaft 32.

In operation, air flows through fan assembly 12 and compressed air is supplied to high pressure compressor 14 through booster 22. The booster discharge air is further compressed and delivered to combustor 16. Hot products of combustion (not shown in Figure 1) from combustor 16 drive turbines 18 and 20, and turbine 20 drives fan assembly 12 and booster 22 by way of shaft 31. Engine 10 is operable at a range of operating conditions between design operating conditions and off-design operating conditions.

In the exemplary embodiment, a bypass duct 40 is utilized to bypass a portion of the airflow from fan assembly 12 around gas turbine engine 10. More specifically, bypass duct 40 is defined between an outer casing 42 and a splitter 44 that substantially circumscribes booster 22. Accordingly, a first portion of the airflow compressed by fan assembly 12 is divided between bypass duct 40 and an inlet 46 to the booster 22 utilizing splitter 44 coupled upstream from gas turbine engine 10.

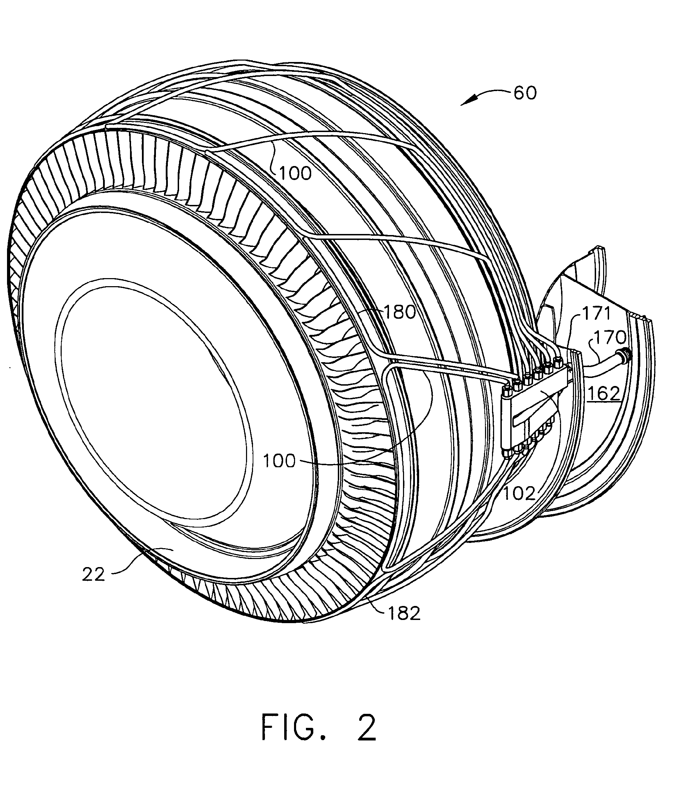

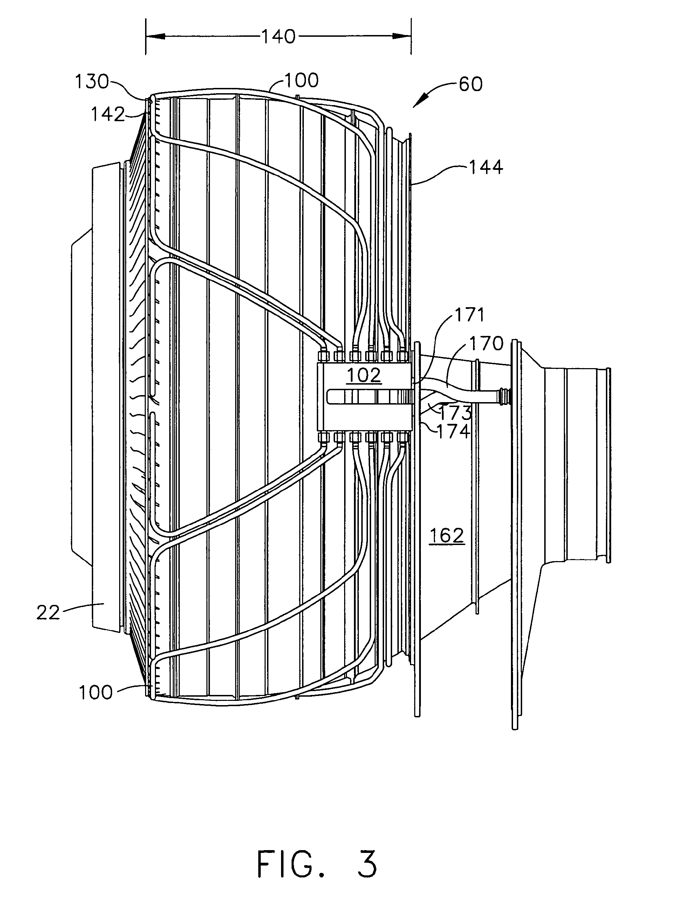

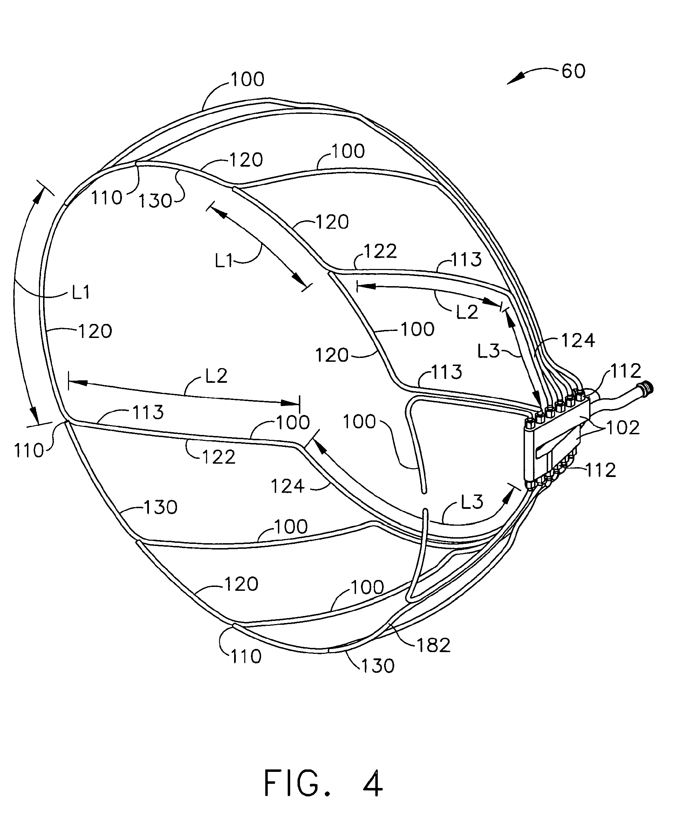

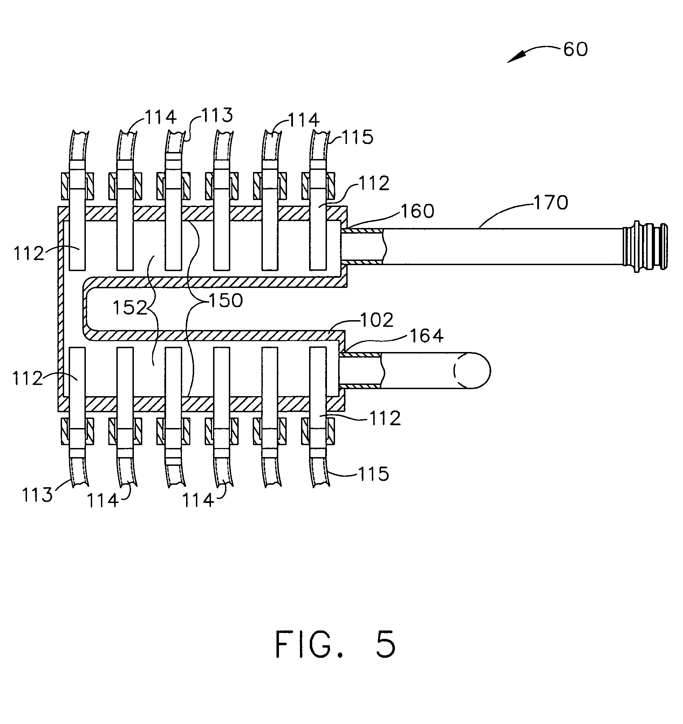

Figure 2 is a side view of a portion of gas turbine engine 10 shown in Figure 1 including a first exemplary ice protection system 60. Figure 3 is a side view of a portion of gas turbine engine 10 shown in Figure 1 including ice protection system 60. Figure 4 is a side view of ice protection system 60. Figure 5 is side view of a portion of ice protection system 60. Specifically, in the exemplary embodiment, ice protection system 60 facilitates preventing ice accretion and/or mitigates ice formation along splitter leading edge 50.

In the exemplary embodiment, ice protection system 60 includes a plurality of heat pipes 100, that are each coupled to an approximately U-shaped manifold 102, and spaced circumferentially around engine 10. Each heat pipe 100 has an effective thermal conductivity that is approximately several orders of magnitude higher than that of copper. More specifically, each heat pipe 100 uses a liquid that evaporates by absorbing the heat from a hot end. The vapor generated then travels through the center of heat pipe 100, or through a channel formed within heat pipe 100, and condenses at the cold end of heat pipe 100, thereby transferring heat to the cold end. More specifically, each heat pipe 100 includes a wick (not shown) that extends from one end of the heat pipe to the other end such that the condensed liquid is transported back to the hot end by capillary action, thereby completing the circuit. In the exemplary embodiment, each heat pipe 100 utilizes water as a working fluid within heat pipe 100. Heat pipes 100 are circumferentially-spaced around booster 22. More specifically, heat pipes 100 are coupled to gas turbine engine 10 such that plurality of heat pipes 100 are operationally positioned between gas turbine engine 10 and splitter 44.

Accordingly, each heat pipe 100 has a condenser end 110, an evaporator end 112, and a body 113 extending therebetween. Body 113 is substantially hollow such that a cavity 114 is defined therein. Body 113 is lined with a capillary structure or wick 115 that is saturated with a volatile or working fluid. In the exemplary embodiment, each heat pipe evaporator end 112 is coupled to manifold 102, and each heat pipe condenser end 110 is coupled adjacent splitter leading edge 50 to facilitate preventing ice accretion and/or to mitigate ice formation, on and/or along splitter leading edge 50.

In the exemplary embodiment, each heat pipe 100 is substantially S-shaped and includes at least a first portion 120 that extends from upstream end 110 for a predetermined length L₁, a second portion 122 that extends from first portion 120 for a predetermined length L₂, and a third portion 124 that extends from second portion 122 for a predetermined length L₃ to evaporator end 112. In the exemplary embodiment, first, second, and third portions 120, 122, and 124 are fabricated unitarily to form a respective heat pipe 100. For example, heat pipe 100 is bent or otherwise shaped to form first, second, and third portions 120, 122, and 124, respectively.

In another embodiment, each heat pipe 100 is formed from a serial assembly of several heat pipe sections 120, 122 and 124, with junctions between adjacent sections to facilitate assembly and removal and/or replacement of ice protection system 60. More specifically, each heat pipe 100 includes an unitarily formed first portion 120, second portion 122, and third portion 124, and are bent or formed such that plurality of first portions 120 are axially oriented to define a segmented ring 130 that substantially circumscribes a radially inner surface 132 of splitter 44. Moreover, each respective first portion 120 is formed substantially parallel to each respective third portion 124, and the respective second portion 122 is formed substantially obliquely to respective first and third portions 120 and 124.

In the exemplary embodiment, L₁ is determined based on splitter circumference and the quantity of heat pipes 100 utilized to heat splitter leading edge 50. More specifically, system 60 is coupled to gas turbine 10 such that plurality of first portions 120 substantially circumscribe an interior circumference of splitter 44, i.e. approximately equal to a circumference of splitter leading edge 50. For example, assuming splitter 44 has an interior circumference of approximately 240 inches, and system 60 includes twelve heat pipes 100, i.e. twelve first portions 120, each heat pipe first portion 120 will have a length, L₁, that is approximately twenty inches in length (240 ÷ 12 first portions), such that when lengths L₁ are positioned approximately end-to-end around an interior surface 132 of splitter 44, heat pipes 100 will facilitate increasing an operating temperature of splitter leading edge 50, and thus facilitate preventing ice accretion and/or mitigate ice formation, on and/or along splitter leading edge 50. Accordingly, and in the exemplary embodiment, heat pipes 100 are coupled to gas turbine engine 10 such that plurality of first portions 120 are positioned sequentially and approximately circumferentially around an interior surface of splitter leading edge 50.

In the exemplary embodiment, L₂ is determined based on a distance 140 defined between a booster forward end 142 and a booster aft end 144. More specifically, L₂ is sized such that each second portion 122 extends from the respective first portion 120 in a substantially aftward direction toward third portion 124. Accordingly, and in the exemplary embodiment, each second portion 122 has a length L₂ that is substantially equal to each other respective second portion length L₂.

For example, assuming booster 22 is approximately forty inches in width, i.e. distance 140 defined between booster forward end 142 and booster aft end 144 is approximately forty inches, each second portion 122 will have a length L₂ that is sized such that each second portion 122 extends from the respective first portion 120 to a respective third portion 124 along the outer surface of booster 22. In the exemplary embodiment, distance L₃ is defined between manifold 102 and each respective second portion 122 as discussed later herein.

In the exemplary embodiment, manifold 102 includes a plurality of openings 150 that are each sized to receive a respective heat pipe evaporator end 112 therethrough such that each heat pipe 100 extends at least partially into a cavity 152 defined through manifold 102. Manifold 102 also includes an inlet 160 that is in flow communication with an oil sump or reservoir 162 and an outlet 164 that is in flow communication with oil sump 162. More specifically, manifold 102 includes an inlet pipe 170 that is coupled to manifold inlet 160 and extends through a first fan frame opening 171 into sump 162 and an outlet pipe 173 that is coupled to manifold outlet 164 and extends through a second fan frame opening 174 into sump 162. Accordingly, and in the exemplary embodiment, gas turbine engine lubrication oil is utilized as a heat source and channeled from the gas turbine engine oil return line, through inlet pipe 170 and then through manifold 102.

As the oil is channeled through manifold 102, the relatively warm gas turbine return oil is placed in thermal contact with each respective heat pipe evaporator end 112 thus heating each heat pipe 100. As a result, the operating temperature of each heat pipe evaporator end 112 is increased due to the thermal contact with the relatively warm oil, a liquid within each heat pipe evaporates by absorbing the heat from evaporator end 112, i.e. the hot end of heat pipe 100. The vapor generated then travels through the center of each respective heat pipe 100 and condenses at heat pipe condenser end 110, i.e. the cold end of heat pipe 100, thereby transferring heat to the condenser end 110. Thus in the exemplary embodiment, the gas turbine return oil supply is utilized as a heat source to facilitate heating each heat pipe evaporator end 112 and thus facilitate increasing an operating temperature of splitter leading edge 50, and therefore facilitate preventing ice accretion and/or mitigate ice formation, on and/or along splitter leading edge 50. Moreover, coupling manifold 102 externally from sump 162 facilitates allowing maintenance personnel to retrofit system 60 on either a new or in-service gas turbine engine with minimal modifications to the gas turbine engine.

During assembly, manifold 102 is coupled to gas turbine engine 10 such that manifold 102 is in thermal communication with a heat source, i.e. oil sump 162. A first heat pipe 180 is coupled to manifold 102 such that first heat pipe 180 partially circumscribes gas turbine engine 10 in a clockwise orientation, and a second heat pipe 182 is coupled to manifold 102 such that second heat pipe 182 partially circumscribes gas turbine engine 10 in a counter-clockwise orientation. More specifically, and in the exemplary embodiment, system 60 includes *n* heat pipes 100 wherein *n*/2 heat pipes 100 are oriented in a clockwise direction and *n*/2 heat pipes are oriented in a counter-clockwise direction. Moreover, since heat pipe first portions 120 are arranged to substantially circumscribe an interior circumference of splitter 44, each respective heat pipe third portion 124 has a length L₃ that increases as the respective first portion 120 is positioned farther from manifold 102.

More specifically, the heat pipes positioned farthest from manifold 102 will have a third portion length L₃ that is greater than a third portion length L₃ of a first portion 120 that is positioned nearest the manifold. Accordingly, the length L₃ of each respective third portion 124 will gradually increase as the respective first portions 120 are positioned further from the manifold 102 in both the clockwise and counter-clockwise directions. Accordingly, heat pipes 100 that have a first portion 120 that is positioned farthest from manifold 102 will have a greater overall length than heat pipes 100 having a first portion nearest manifold 102. Moreover, since heat pipes 100 with the greatest overall length are positioned nearer the upper surface of splitter leading edge 50, gravity is utilized to channel working fluid through each respective heat pipe 100.

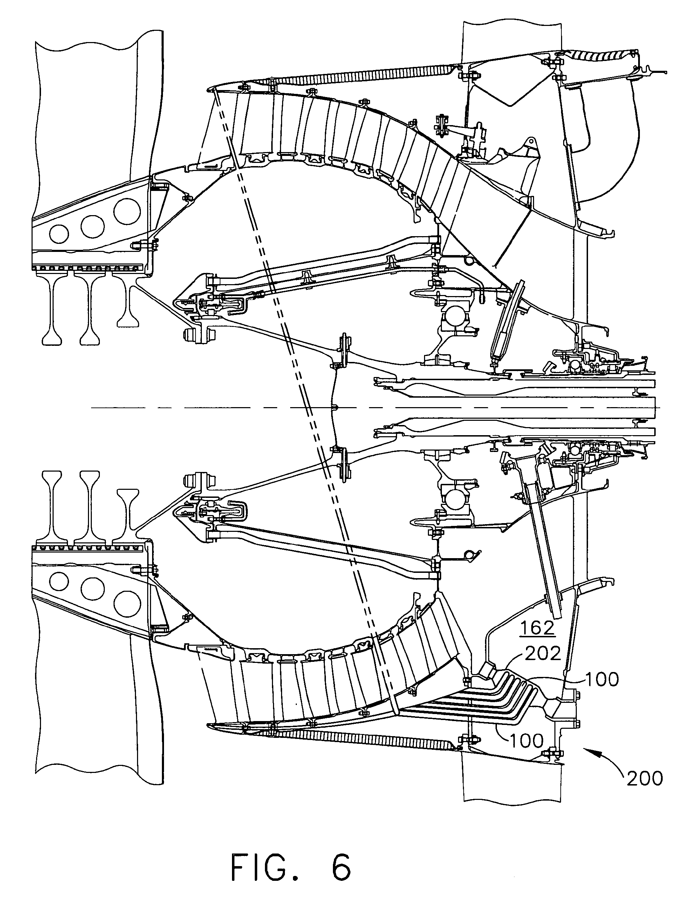

Figure 6 is a schematic illustration of an exemplary ice protection system 200. Ice protection system 200 is substantially similar to ice protection system 60, shown in Figures 2-5, and components in ice protection system 200 that are identical to components of ice protection system 60 are identified in Figure 6 using the same reference numerals used in Figures 2 and 3. Accordingly, ice protection system 200 includes plurality of heat pipes 100. As described above, each heat pipe 100 has an effective thermal conductivity that is several orders of magnitude higher than that of copper.

Ice protection system 200 also includes an approximately straight manifold 202 that is coupled within sump 162. Manifold 202 includes a plurality of openings 204 that are each sized to receive a respective heat pipe evaporator end 112 therethrough such that each heat pipe 100 extends at least partially into a cavity (not shown) that is defined through manifold 202. Manifold 202 also includes an inlet 210 that is in flow communication with a gas turbine engine return oil line 212 and an outlet 214 that is in flow communication with a gas turbine engine oil drain line 216. Moreover, gas turbine engine 10 includes a plurality of openings 220 that extend through a fan frame 222. For example, in the exemplary embodiment, system 200 includes m heat pipes, accordingly gas turbine engine 10 also includes m openings 220 to facilitate routing the m heat pipes 100 through fan frame 222. In another embodiment, fan frame 222 includes a single opening and the plurality of heat pipes 100 are routed through the single opening. Accordingly, and in the exemplary embodiment, gas turbine engine lubrication oil is utilized as a heat source and channeled from the gas turbine engine oil return line, through manifold 202 and discharged from gas turbine engine 10 through oil drain line 216 to an external lube oil conditioning system (not shown), for example.

As the oil is channeled through manifold 202, the relatively warm gas turbine return oil is placed in thermal contact with each respective heat pipe evaporator end 112 thus heating each heat pipe 100. As a result, the operating temperature of each heat pipe evaporator end 112 is increased due to the thermal contact with the relatively warm oil, a liquid within each heat pipe evaporates by absorbing the heat from evaporator end 112, i.e. the hot end of heat pipe 100. The vapor generated then travels through the center of each respective heat pipe 100 and condenses at heat pipe condenser end 110, i.e. the cold end of heat pipe 100, thereby transferring heat from sump 162 to condenser end 110. Thus in the exemplary embodiment, the gas turbine return oil supply is utilized as a heat source to facilitate heating each heat pipe evaporator end 112 and thus facilitate increasing an operating temperature of splitter leading edge 50, and therefore facilitate preventing ice accretion and/or mitigate ice formation, on and/or along splitter leading edge 50. Moreover, coupling manifold 202 internally within sump 162 facilitates improving the thermal transfer between the lubrication oil and system 200.

The above-described ice protection systems are cost-effective and highly reliable in facilitating the prevention of ice accumulation along exposed surfaces of the engine. More specifically, the heat pipes enable heat to be transferred from selected heat sources to selected components whenever the engine is operating and without requiring the use of an external control system. Moreover, no external initiation or modulation of heat flux is required with the above-described ice protection system. Furthermore, because compressor bleed air is not utilized, engine performance is not adversely affected by the ice protection systems described herein. As a result, ice protection systems are provided which facilitate enhanced compressor stall protection when the engine is operating in potential icing conditions, and thus eliminates compressor stall margin shortfalls that may occur following a compressor ice shed event. By constantly supplying heat to the areas susceptible for ice accumulation, the ice protection system also facilitates avoidance of significant accumulation. Also, by applying heat to the interface between the engine surface and the ice, the bond between the ice and the engine surface is weakened, thus facilitating shedding of the ice before it reaches any significant mass capable of causing an engine stall or flame out.

Exemplary embodiments of ice protection systems are described above in detail. The ice protection systems are not limited to the specific embodiments described herein, but rather, components of each system may be utilized independently and separately from other components described herein. For example, each ice protection system component can also be used in combination with other ice protection system components and with other turbine engines.

While the invention has been described in terms of various specific embodiments, those skilled in the art will recognize that the invention can be practiced with modification within the spirit and scope of the claims.

**PARTS LIST**

| | |
|---|---|
| 10 | gas turbine engine |
| 12 | fan assembly |
| 14 | high pressure compressor |
| 16 | combustor |
| 18 | high pressure turbine |
| 20 | low pressure turbine |
| 22 | booster |
| 24 | fan blades |
| 26 | rotor disc |
| 28 | intake side |
| 30 | exhaust side |
| 31 | first rotor shaft |
| 31 | shaft |
| 32 | second rotor shaft |
| 40 | bypass duct |
| 42 | outer casing |
| 44 | splitter |
| 46 | inlet |
| 50 | splitter leading edge |
| 60 | ice protection system |
| 100 | heat pipe |
| 102 | manifold |
| 110 | heat pipe condenser end |
| 112 | heat pipe evaporator end |
| 113 | body |
| 114 | cavity |
| 115 | capillary structure or wick |
| 120 | first portions |
| 122 | second portion |
| 124 | third portion |
| 130 | segmented ring |
| 132 | interior surface |
| 140 | distance |
| 142 | booster forward end |
| 144 | booster aft end |
| 150 | plurality of openings |
| 152 | cavity |
| 160 | inlet |
| 162 | sump |
| 164 | outlet |
| 170 | inlet pipe |
| 171 | first fan frame opening |
| 173 | outlet pipe |
| 174 | second fan frame opening |
| 180 | first heat pipe |
| 182 | second heat pipe |
| 200 | ice protection system |
| 202 | manifold |
| 204 | plurality of openings |
| 210 | inlet |
| 212 | engine return oil line |
| 214 | outlet |
| 216 | oil drain line |
| 220 | plurality of openings |
| 222 | fan frame |

## Claims

1. An ice protection system (60) for a gas turbine engine (10) including a fan assembly (12), a booster (22) downstream from the fan assembly, a high pressure compressor (14) downstream from the booster, and a splitter (44) circumscribing the booster, said ice protection system comprising:
a manifold (102) coupled to the gas turbine engine such that said manifold is coupled in thermal communication with a heat source;
a first heat pipe (100) coupled to said manifold such that said first heat pipe partially circumscribes the gas turbine engine in a clockwise orientation; and
a second heat pipe coupled to said manifold such that said second heat pipe partially circumscribes the gas turbine engine in a counter-clockwise orientation.

2. An ice protection system (60) in accordance with Claim 1 further comprising:
a third heat pipe (100) coupled to said manifold (102) such that said third heat pipe partially circumscribes the gas turbine engine (10) in a clockwise orientation, wherein said third heat pipe has a length measured from a condenser end (110) to an evaporator end (112) that is greater than a corresponding length of said first heat pipe; and
a fourth heat pipe coupled to said manifold such that said fourth heat pipe partially circumscribes the gas turbine engine in a counter-clockwise orientation, wherein said fourth heat pipe has a length measured from a condenser end to an evaporator end that is greater than a corresponding length of said second heat pipe.

3. An ice protection system (60) in accordance with Claim 1 or Claim 2 further comprising a plurality of heat pipes (100) coupled to the gas turbine engine (10), wherein each said heat pipe includes an integrally formed first portion (120), second portion (122), and third portion (124), such that said plurality of first portions are axially oriented to define a segmented ring (130) that substantially circumscribes a radially inner surface (132) of the splitter (44).

4. An ice protection system (60) in accordance with any preceding Claim further comprising a plurality of heat pipes (100) coupled to the gas turbine engine (10), wherein each said heat pipe includes an integrally formed first portion (120), second portion (122), and third portion (124), wherein said first portion is formed substantially parallel to said third portion, and said second portion is formed substantially obliquely to said first and third portions.

5. An ice protection system (200) in accordance with any preceding Claim further comprising:
a first plurality of heat pipes (180) coupled to the gas turbine engine (10) such that said first plurality of heat pipes partially circumscribe the gas turbine engine in a clockwise orientation, wherein each of said first plurality of heat pipes include a different length measured from a condenser end (110) to an evaporator end (112) of each said heat pipe; and
a second plurality of heat pipes (182) coupled to the gas turbine engine such that said second plurality of heat pipes partially circumscribe the gas turbine engine in a counter-clockwise orientation, wherein each of said second plurality of heat pipes include a different length measured from a condenser end to an evaporator end of each said heat pipe.

6. An ice protection system (200) in accordance with any preceding Claim wherein the gas turbine engine (10) further includes a fan frame (222) that includes a first opening (171) and a second opening (174) extending therethrough, said manifold (102) comprises:
an inlet pipe (170) coupled to said manifold such that said inlet pipe extends through the sump first fan frame opening into a lubrication sump (162); and
an outlet pipe (173) coupled to said manifold such that said outlet pipe extends through the fan frame second opening into the lubrication sump.

7. An ice protection system (200) in accordance with any preceding Claim wherein the heat source comprises a lubrication sump (162), and said manifold (102) is coupled with the sump, said ice protection system further comprising:
a sump inlet line (210) coupled to a first end of said manifold; and
a sump discharge line (212) coupled to a second end of said manifold to enable lubrication fluid to be channeled therethrough.

8. A gas turbine engine (10) comprising:
a fan assembly (12);
a booster (22) downstream from said fan assembly;
a high pressure compressor (14) downstream from said booster;
a splitter (44) circumscribing said booster; and
an ice protection system (60) comprising:
a manifold (102) coupled to the gas turbine engine such that said manifold is coupled in thermal communication with a heat source;
a first heat pipe (100) coupled to said manifold such that said first heat pipe partially circumscribes the gas turbine engine in a clockwise orientation; and
a second heat pipe coupled to said manifold such that said second heat pipe partially circumscribes the gas turbine engine in a counter-clockwise orientation.

9. A gas turbine engine (10) in accordance with Claim 8 wherein said ice protection system (60) further comprises:
a third heat pipe (100) coupled to said manifold (102) such that said third heat pipe partially circumscribes the gas turbine engine in a clockwise orientation, wherein said third heat pipe has a length measured from a condenser end (110) to an evaporator end (112) that is greater than a corresponding length of said first heat pipe; and
a fourth heat pipe coupled to said manifold such that said fourth heat pipe partially circumscribes the gas turbine engine in a counter-clockwise orientation, wherein said fourth heat pipe has a length measured from a condenser end to an evaporator end that is greater than a corresponding length of said second heat pipe.

10. A gas turbine engine (10) in accordance with Claim 8 or Claim 9 wherein said ice protection system (60) further comprises a plurality of heat pipes (100) coupled to said gas turbine engine, wherein each said heat pipe includes an integrally formed first portion (120), second portion (122), and third portion (124), such that said plurality of first portions are axially oriented to define a segmented ring (130) that substantially circumscribes a radially inner surface of the splitter (44).
